# EUROPÄISCHE PATENTSCHRIFT

(11) **EP 1 798 066 B1**
(45) Veröffentlichungstag und Bekanntmachung des Hinweises auf die Patenterteilung: **04.11.2009**
(21) Anmeldenummer: 06123560.2
(22) Anmeldetag: 07.11.2006
(51) Int. Cl.: B60C 11/12

(54) **Laufstreifenprofil mit gitterförmigen Feineinschnitten**
Tread profil with net-shaped sipes
Band de roulement avec incisions de structure d'une grille

(30) Priorität: 19.12.2005 DE 102005061118
(43) Veröffentlichungstag der Anmeldung: 20.06.2007
(60) Teilanmeldung: 09160114.6
(73) Patentinhaber: Continental Aktiengesellschaft, 30165 Hannover (DE)
(72) Erfinder: Diensthuber, Franz, 30167, Hannover (DE); Heine, Stefan, 30163, Hannover (DE); Seng, Matthias, 30449, Hannover (DE)

(56) Entgegenhaltungen:
- EP-A- 1 459 908
- EP-A- 1 580 034
- EP-A- 1 693 230
- EP-A1- 0 618 092
- EP-A2- 1 080 949
- AT-B- 385 953
- JP-A- 8 216 627

## Beschreibung

Die Erfindung betrifft ein Laufstreifenprofil eines Fahrzeugreifens - insbesondere eines Winterreifens - mit in radialer Richtung des Fahrzeugreifens erhabenen Profilelementen, mit einem Flächenbereich in der radial nach außen gerichteten Oberfläche des Profilelementes mit mehreren nebeneinander angeordneten durch ein gitterförmiges Feineinschnittsystem voneinander getrennten Profilelementabschnitten.

Derartige gitterförmige Feineinschnittsysteme sind üblicherweise durch ein System sich in viele Richtungen gegenseitig abstützender vom Gitter unterteilten Profilelementabschnitte ausgebildet. Ein derartiges Laufstreifenprofil mit gitterförmigem Feineinschnittsystem ist beispielsweise aus der DE19829038C2 bekannt. Dieses Feineinschnittsystem ermöglicht viele, dicht beieinander liegende Griffkanten sowohl in Umfangs- als auch in Seitenrichtung und somit guter Schneegriff. Die gegenseitige Abstützung in unterschiedlichste Richtungen führt zu sehr hoher Steifigkeit, der Profilblockelemente, die zwar gute Handling-Eigenschaften auf trockener Straße ermöglichen, zum andern allerdings das Öffnen der Feineinschnitte erschweren. Die Aufnahme von Schnee in die Feineinschnitte während des Durchlaufens des Reifenlatsches ist hierdurch erschwert. Die Schneegriffeigenschaft wird hierdurch noch unerwünscht beeinträchtigt.

Aus der EP0618092A1 ist es bekannt, einen Fahrzeugreifen mit Profilelementen auszubilden, in denen Doppel-T-förmige Strukturen ausgebildet sind, die jeweils von Feineinschnitten und dem Rand des Profilelementes begrenzt werden. Aus der EP 1 080949A2 ist es bekannt, Profilblöcke mit Einschnittmustern in der Art von Blütenblättern einer Knospe versehen auszubilden. Bei beiden Ausbildungen bewirken die durch die Feineinschnitte bedingten Muster ein gegenseitiges Ineinandergreifen der von Feineinschnitten begrenzten Profilblockelementabschnitte. Die Bewegung dieser Abschnitte wird hierdurch weitgehend eingeschränkt. Aus der gattungsbildenden EP1 459 908 A1 sind Profilblockelemente bekannt mit zwei parallelen breiteren Feineinschnitten und quer verlaufenden in Gegenrichtung geneigten weiteren Feineinschnitten. Einer der weiteren Feineinschnitte verbindet die ersten breiten Feineinschnitte miteinander. Weitere Feineinschnitte erstrecken sich vom Profilblockrand über die Verlängerungslinie des einen ersten Feineinschnitts hinweg.

Der Erfindung liegt die Aufgabe zugrunde mit einfachen Mitteln zu ermöglichen, bei einem Laufstreifenprofil mit Feineinschnittgitter die Schneegriffeigenschaften zu verbessern.

Die Erfindung wird durch die Ausbildung eines Laufstreifenprofil eines Fahrzeugreifens - insbesondere eines Winterreifens - mit in radialer Richtung des Fahrzeugreifens erhabenen Profilelementen, mit einem Flächenbereich in der radial nach außen gerichteten Oberfläche des Profilelementes mit mehreren nebeneinander angeordneten durch ein gitterförmiges Feineinschnittsystem voneinander getrennten Profilelementabschnitten, wobei das gitterförmige Feineinschnittsystem aus mehreren geradlinigen, zu einander parallelen ersten Feineinschnitten und aus weiteren Feineinschnitten ausgebildet ist, gemäß den Merkmalen von Anspruch 1, dadurch gelöst, dass jeder erste Feineinschnitt durch N mit N ≥ 2 weitere Feineinschnitte mit seinem jeweils benachbarten ersten Feineinschnitt verbunden ist und Profilelementabschnitte jeweils vollständig von ersten Feineinschnitten und weiteren Feineinschnitten umschlossenen ausgebildet sind, wobei die geradlinigen, parallelen ersten Feineinschnitte in ihrer Ausrichtung mit ihrer größten Richtungskomponente in Umfangsrichtung des Fahrzeugluftreifens ausgebildet sind und wobei die weiteren Feineinschnitte in ihrer Schnittstelle mit einem ersten Feineinschnitt jeweils mit einem Versatz in Erstreckungsrichtung des ersten Feineinschnitt ausgebildet sind. Die Geradlinigen ersten Feineinschnitte ermöglichen in geringem Umfang ein Aneinandervorbeigleiten der von ihnen getrennten Profilelementabschnitte im Feineinschnittgitter entlang des jeweiligen ersten Feineinschnitts, wodurch die weiteren Feineinschnitte im Reifenlatsch stärker geöffnet werden. Das Eindringen von Schnee, Matsch oder sonstigem weichem Untergrundmaterial in die weiteren Feineinschnitte wird erleichtert und somit die Schnee-Schneereibung verbessert. Die Hauptausrichtungskomponente der ersten Feineinschnitte in Umfangsrichtung ermöglicht somit ein Gleiten hauptsächlich in Umfangsrichtung. Die erforderliche Quersteifigkeit für gute Handlingeigenschaften auf trockenem Untergrund kann aufrechterhalten werden. Durch den Versatz kann die Steifigkeit des Profilelementes vergleichmäßigt werden.

Besonders vorteilhaft ist die Ausbildung eines Laufflächenprofils gemäß den Merkmalen von Anspruch 2, wobei auch die weiteren Feineinschnitte zumindest in ihrem Erstreckungsbereich zwischen jeweils benachbarten ersten Feineinschnitten geradlinig verlaufend ausgebildet sind. Hierdurch wird die Beweglichkeit der Profilelemente innerhalb des Feineinschnittgitters verbessert.

Besonders vorteilhaft ist die Ausbildung eines Laufflächenprofils gemäß den Merkmalen von Anspruch 3, wobei auch die weiteren Feineinschnitte zumindest in ihrem Erstreckungsbereich zwischen jeweils benachbarten ersten Feineinschnitten parallel zueinander verlaufend ausgebildet sind. Selbsthemmung der Profilelemente kann hierdurch vermieden werden.

Besonders vorteilhaft ist die Ausbildung eines Laufflächenprofils gemäß den Merkmalen von Anspruch 4, wobei die weiteren Feineinschnitte zumindest in ihrem Erstreckungsbereich zwischen jeweils benachbarten ersten Feineinschnitten in ihrer Ausrichtung ihre größte Richtungskomponente in axialer Richtung des Fahrzeugluftreifens aufweisen. Dies dient guten Traktions- und Bremseigenschaften. Hierdurch kann die laterale Steifigkeit erhöht werden.

Besonders vorteilhaft ist die Ausbildung eines Laufflächenprofils gemäß den Merkmalen von Anspruch 5, wobei der Versatz der weiteren Feineinschnitte innerhalb eines gitterförmigen Feineinschnittsystems jeweils mit gleicher Orientierungsrichtung der ersten Feineinschnitte ausgebildet ist. Hierdurch kann die Steifigkeit des Profilelementes vergleichmäßigt und die Herstellung mit wenigen gleichen Lamellenblechbauteilen vereinfacht werden.

Besonders vorteilhaft ist die Ausbildung eines Laufflächenprofils gemäß den Merkmalen von Anspruch 6, wobei der Versatz der weiteren Feineinschnitte innerhalb eines gitterförmigen Feineinschnittsystems jeweils mit gleichem Maß der Versatzlänge ausgebildet ist. Hierdurch kann die Steifigkeit des Profilelementes weiter vergleichmäßigt werden.

Besonders vorteilhaft ist die Ausbildung eines Laufflächenprofils gemäß den Merkmalen von Anspruch 7, wobei die Abstände zwischen jeweils zwei benachbarten ersten Feineinschnitten eines Feineinschnittgitters gleich groß ausgebildet sind.

Besonders vorteilhaft ist die Ausbildung eines Laufflächenprofils gemäß den Merkmalen von Anspruch 8, wobei die ersten Feineinschnitte in ihrer Ausrichtung einen Winkel δ (δ₁, δ₂) zur axialen Richtung A des Fahrzeugluftreifens einschließen mit 5° ≤ δ≤ 40°, insbesondere mit 10° ≤ δ≤ 35°. Dies ermöglicht einen guten Kompromiss aus Aquaplaningeigenschaft und Quersteifigkeit.

Besonders vorteilhaft ist die Ausbildung eines Laufflächenprofils gemäß den Merkmalen von Anspruch 9, wobei das erhabene Profilelement ein Profilblockelement einer in Umfangsrichtung des Fahrzeugluftreifens gerichteten über den gesamten Umfang des Fahrzeugluftreifens erstreckten Profilblockreihe ist.

Besonders vorteilhaft ist die Ausbildung eines Laufflächenprofils gemäß den Merkmalen von Anspruch 10, wobei im Laufstreifenprofil mehrere derartige radial erhabene Profilelemente in unterschiedlichen axialen Positionen des Fahrzeugluftreifens ausgebildet sind, die jeweils ein Profilblockelement einer in Umfangsrichtung des Fahrzeugluftreifens gerichteten über den gesamten Umfang des Fahrzeugluftreifens erstreckten Profilblockreihe ist.

Besonders vorteilhaft ist die Ausbildung eines Laufflächenprofils gemäß den Merkmalen von Anspruch 11, wobei im Laufstreifenprofil mehrere derartige radial erhabene Profilelemente in unterschiedlichen axialen Positionen des Fahrzeugluftreifens ausgebildet sind, wobei bei dem im Fahrzeugluftreifen axial äußeren erhabenen Profilelementen die Abstände zwischen jeweils zwei benachbarten ersten Feineinschnitten des Feineinschnittgitters größer als bei den axial weiter innen angeordneten radial erhabenen Profilelementen ausgebildet sind. Hierdurch können die Trockenhandlingeigenschaften verbessert werden.

Besonders vorteilhaft ist die Ausbildung eines Laufflächenprofils gemäß den Merkmalen von Anspruch 12, wobei die Abstände der benachbarten ersten Feineinschnitte eines Feineinschnittgitters im Reifenschulterbereich 1,5 bis 2,0 mal so groß ausgebildet sind wie die Abstände der benachbarten ersten Feineinschnitte eines Feineinschnittgitters im Kronenbereich des Fahrzeugreifens.

Besonders vorteilhaft ist die Ausbildung eines Laufflächenprofils gemäß den Merkmalen von Anspruch 14, wobei die Abstände benachbarter erster Feineinschnitte eines Feineinschnittgitters in axial zwischen erhabenen Profilelementen im Reifenschulterbereich und Profilelementen im Reifenkronenbereich ausgebildeten weiteren erhabenen Profilelementen kleiner als die Abstände der benachbarten ersten Feineinschnitte eines Feineinschnittgitters im Reifenschulterbereich und größer als die Abstände benachbarter erster Feineinschnitte eines Feineinschnittgitters im Kronenbereich ausgebildet sind.

Besonders vorteilhaft ist die Ausbildung eines Laufflächenprofils gemäß den Merkmalen von Anspruch 15, wobei die Abstände benachbarter erster Feineinschnitte eines Feineinschnittgitters in axial zwischen erhabenen Profilelementen im Reifenschulterbereich und Profilelementen im Reifenkronenbereich ausgebildeten weiteren erhabenen Profilelementen 1,2 bis 1,6 mal so groß ausgebildet sind wie die Abstände der benachbarten ersten Feineinschnitte eines Feineinschnittgitters im Kronenbereich des Fahrzeugreifens.

Die Erfindung wird im Folgenden an Hand der in den Figuren 1 bis 4 dargestellten Ausführungsbeispiele näher erläutert. Darin zeigen
- Fig. 1: Fahrzeugluftreifen mit Laufflächenprofil in perspektivischer Darstellung,
- Fig. 2: Draufsicht auf einen Umfangsausschnitt des Laufstreifenprofils von Fig. 1,
- Fig. 3a: Vergrößertes Profilblockelement zur Erläuterung des erfindungsgemäß ausgebildeten Feineinschnittgitters im unbelasteten Zustand,
- Fig. 3b: Profilblockelement von Fig. 3 a in Schnittdarstellung X-X von Fig. 3a,
- Fig. 4a: Vergrößertes Profilblockelement von Fig. 3a zur Erläuterung des Gleiteffektes im Feineinschnittgitter im belasteten Zustand beim Durchlaufen des Reifenlatsches
- Fig. 4b: Profilblockelement von Fig. 4 a in Schnittdarstellung X-X von Fig. 4a .

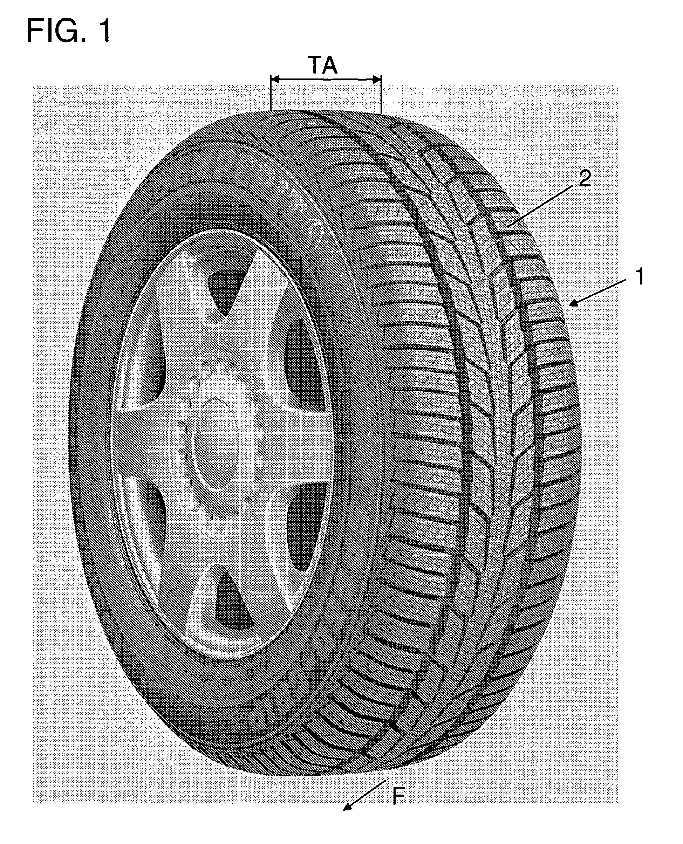

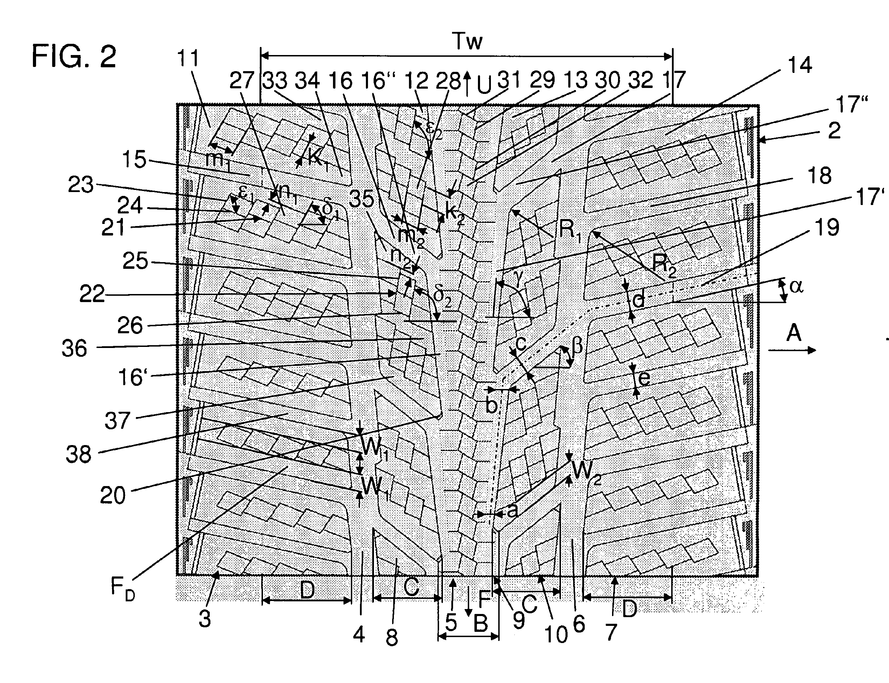

Der in Fig. 1 und 2 dargestellte Fahrzeugluftreifen 1 ist insbesondere als Radialreifen ausgeführt und vorzugsweise ein PKW-Reifen oder ein Reifen für leichte Nutzfahrzeuge. Der Fahrzeugluftreifen ist mit einem Laufstreifenprofil 2 versehen, welches für den Einsatz unter winterlichen Fahrbedingungen besonders geeignet ist. In der folgenden Beschreibung wird das Laufstreifenprofil 2 über seine Breite TA betrachtet, die der Latschbreite und somit der Breite der Bodenaufstandsfläche des Fahrzeugluftreifens im montierten, belasteten Betriebszustand unter Normbedingungen (gemäß E.T.R.T.O. Standards) entspricht.

In Fig.2 ist die axiale Richtung A des Fahrzeugluftreifens mit Pfeildarstellung eingetragen. Ebenso ist die Umfangsrichtung U des Fahrzeugluftreifens mit Pfeildarstellung angegeben.

Bei dem in Fig.2 dargestellten Laufstreifenprofil 2 handelt es sich um ein laufrichtungsgebunden gestaltetes Profil. Das heißt, dass Reifen mit diesem Profil eine bevorzugte Abrollrichtung besitzen, die in Fig. 1 und 2 durch den Pfeil F angedeutet ist, der entgegen der in Fig. 2 mit Pfeil eingetragenen Umfangsrichtung U weist, und dass solche Reifen daher auch entsprechend ihrer Abrollrichtung am Fahrzeug zu montieren sind.

Wie in Fig. 2 zu erkennen ist, ist das Laufstreifenprofil 2 in axialer Richtung ausgehend von der linken Reifenschulter zur rechten Reifenschulter hin aus einer linken Schulterprofilblockreihe 3, einer Umfangsrille 4, einem Mittenprofilband 5, einer Umfangsrille 6 und einer rechten Schulterprofilblockreihe 7 ausgebildet, die sich jeweils in Umfangsrichtung U über den gesamten Umfang des Fahrzeugluftreifens hin erstrecken. Die linke Schulterprofilblockreihe 3 ist in axialer Richtung vom Mittenprofilband 5 axial durch die Umfangsrille 4 und das Mittenprofilband 5 von der rechten Schulterprofilblockreihe 7 durch die Umfangsrille 6 axial getrennt.

Die linke Schulterprofilblockreihe 3 erstreckt sich ebenso wie die rechte Schulterprofilblockreihe 7 über den gesamten Umfang des Fahrzeugluftreifens in Umfangsrichtung U und ist in jeweils aus einer Vielzahl von in Umfangsrichtung U hintereinander angeordneten Profilblockelementen 11 bzw. 14 ausgebildet. Dabei sind die in Umfangsrichtung U hintereinander angeordneten Profilblockelemente 11 der Schulterprofilblockreihe 3 in Umfangsrichtung U in alternierender Reihenfolge durch Querrillen 15 bzw. durch Querrillen 38 voneinander getrennt. Die in Umfangsrichtung U hintereinander angeordneten Profilblockelemente 14 der Schulterprofilblockreihe 7 in Umfangsrichtung U in alternierender Reihenfolge durch Querrillen 19 bzw. durch Querrillen 18 voneinander getrennt.

Das Mittenprofilband 5 ist aus einer zentralen über den Umfang des Fahrzeugluftreifens in Umfangsrichtung U ausgerichtet erstreckten Profilrippe 9 ausgebildet, deren axiale Flanken im wesentlichen aus über den Umfang des Fahrzeugluftreifens verteilten ersten Umfangsabschnitten ausgebildet sind, die in der entgegen der Abrollrichtung F eingetragenen Umfangsrichtung U gesehen unter Einschluss eines Neigungswinkels zur Axialen A von der Profilrippe 9 axial wegweisend nach außen zu der jeweiligen Reifenschulter hin geneigt verlaufen und zwischen denen jeweils in Umfangsrichtung gegenüber den ersten Umfangsabschnitten deutlich kürzere zweite Umfangsabschnitte ausgebildet sind, in denen die jeweilige Flanke einen axial gegenläufig steigend verlaufenden Versatzabschnitt in axialer Richtung zur Rippenmitte der Profilrippe 9 hin mit einem deutlich kleineren Neigungswinkel zur Axialen A aufweisen. Die Umfangspositionen des axialen Versatzes auf der rechts dargestellten Rippenflanke der Profilrippe 9 sind gegenüber den Umfangspositionen des axialen Versatzes auf der linken Rippenflanke der Profilrippe 9 in Umfangsrichtung des Fahrzeugluftreifens versetzt zu einander ausgebildet. Ausgehend von den den axialen Versatz darstellenden kurzen Umfangsabschnitten mit axial nach innen zur Profilrippenmitte hin steigend verlaufenden Abschnitts der jeweiligen Rippenflanke der Profilrippe 9 sind jeweils Profilblockelemente 12 bzw. Profilblockelemente 13 ausgebildet, die sich von der Position des kurzen Versatzes in die entgegen der Abrollrichtung F eingetragene Umfangsrichtung U gesehen und von der Profilrippe 9 weg weisend nach axial außen erstrecken, wobei sich die Profilblockelemente 12 von der Profilrippe 9 ausgehend in Richtung der Schulterprofilblockreihe 3 und die Profilblockelemente 13 in Richtung der Schulterprofilblockreihe 14 erstrecken. Die in Umfangsrichtung U des Fahrzeugluftreifens hintereinander angeordneten Profilblockelemente 12 bilden in Umfangsrichtung U des Fahrzeugluftreifens gesehen eine über den Versatz an die Profilrippe 9 angelehnte Profilblockreihe 8. Die Profilblockelemente 13 bilden in Umfangsrichtung U des Fahrzeugluftreifens gesehen eine über den Versatz an die Profilrippe 9 angelehnte Profilblockreihe 10.

Jedes Profilblockelement 12 ist längs seiner Erstreckung in Umfangsrichtung U ausgehend von der Position des jeweiligen kurzen Versatzes von der Profilrippe 9 längs eines ersten Umfangsabschnitts der Profilrippe 9 durch einen ersten Erstreckungsbereich 16' einer Rille 16 axial getrennt., der an dem vom kurzen Versatz gegenüberliegenden Ende des Erstreckungsbereichs des ersten Umfangsabschnitts der Profilrippe 9 unter Ausbildung eines axial nach außen zur Schulterprofilblockreihe 3 hin gerichteten Knicks in einen zweiten Abschnitt 16" der Rille 16 übergeht, welcher das Profilblockelement 12 von dem in Umfangsrichtung U nächstliegenden nachfolgenden Profilblockelement 12 trennt. Ebenso ist jedes Profilblockelement 13 längs seiner Erstreckung in Umfangsrichtung U ausgehend von der Position des jeweiligen kurzen Versatzes von der Profilrippe 9 längs eines ersten Umfangsabschnitts der Profilrippe 9 durch einen ersten Erstreckungsbereich 17' einer Rille 17 axial getrennt., der an dem vom kurzen Versatz gegenüberliegenden Ende des Erstreckungsbereichs des ersten Umfangsabschnitts der Profilrippe 9 unter Ausbildung eines axial nach außen zur Schulterprofilblockreihe 7 hin gerichteten Knicks in einen zweiten Abschnitt 17" der Rille 17 übergeht, welcher das Profilblockelement 13 von dem in Umfangsrichtung U nächstliegenden nachfolgenden Profilblockelement 13 trennt.

In Umfangsrichtung U beginnt im Anschluss an die jeweilige Knickstelle zwischen Abschnitt 16' und Abschnitt 16" der Rille 16 bzw. des Abschnitts 17' und 17" der Rille 17 ein zweiter Umfangsabschnitt der Profilrippe 9, in dem diese mit ihrer jeweils zur Rille 16 bzw. zur Rille 17 ausgebildeten Rillenflanke mit dem nach axial innen gerichteten Versatz ausgebildet ist. Der Versatz bildet wiederum ein stumpfes Ende eines neuen Abschnitts 16' der Rille 16 bzw. des Abschnitts 17' der Rille 17, der vom Versatz in Umfangsrichtung U ausgehend das nächste Profilblockelement 12 bzw. 13 von der Profilrippe 9 trennt. Im Bereich des Versatzes ist dabei jeweils zwischen der Knickstelle im Übergang von Abschnitt 16' und Abschnitt 16" der einen Rille 16 bzw. von Abschnitt 17' und 17" der einen Rille 17 zum Abschnitts 16' der Versatz in Umfangsrichtung U nachfolgenden Rille 16 bzw. zum Abschnitts 17' der Versatz in Umfangsrichtung U nachfolgenden Rille 17 zwischen Flanke der Profilrippe im zweiten mit Versatz ausgebildeten Umfangserstreckungsabschnitt der Profilrippe 9 und dem in Umfangsrichtung U angrenzenden Profilblockelement 12 bzw. Profilblockelement 13 jeweils lediglich ein kleiner Entkopplungsspalt 20 ausgebildet. Die Spaltbreite ist einem Ausführungsbeispiel 1mm bis 2mm breit, beispielsweise 1 mm breit, gewählt. Der Spalt ist dabei höchstens dreimal so tief (in radialer Richtung) wie breit gewählt.

Die Rillen 16 und die Rillen 17 sind in ihrem gesamten Erstreckungsbereicht 16' bzw. 17' jeweils geradlinig verlaufend, jedoch in der dargestellten Umfangsrichtung U mit kontinuierlich zunehmender Breite der Rille ausgehend von einer Breite a bis zu einer Breite b ausgebildet, wobei die Breite der Rillen jeweils senkrecht zu ihrer Erstreckungsrichtung und in der radial äußeren Kontaktfläche des Reifens zur Straßenoberfläche gemessen wird. In Fig. 2 ist am Beispiel des Abschnitts 17' einer Rille 17" die Breite a am Beginn des Abschnitts 17' und die Breite b am Ende des Abschnitts 17' eingetragen.

Die Rillen 16 bzw. die Rillen 17 erstreckt sich in ihrem Erstreckungsbereich 16" bzw. 17" ebenfalls mit einem geradlinigen Verlauf, sind in diesem Erstreckungsbereich jedoch mit einer konstanten Rillenbreite c ausgebildet, wobei c ≥ b > a.

Die Breiten a und b sind derart gewählt, dass für a und b gilt: (1,2 a) < b < (2,3 a)

In ihrer axialen Verlängerung über die Umfangsrille 4 hinweg geht jede Rille 16 jeweils in eine Querrille 15 der Profilblockreihe 3 über. Ebenso geht in ihrer axialen Verlängerung über die Umfangsrille 6 hinweg jede Rille 17 jeweils in eine Querrille 19 der Profilblockreihe 7 über.

In axialer Richtung von der Profilrippe 9 ausgehend jeweils nach außen zu den Reifenschultern gesehen, schließen die Abschnitte 16' bzw. 17' der Rillen 16 und 17 mit ihrem Erstreckungsverlauf jeweils einen Steigungswinkel γ zur Axialen A des Fahrzeugluftreifens, die Abschnitte 16" bzw. 17" der Rillen 16 und 17 schließen mit ihrem Erstreckungsverlauf jeweils einen Steigungswinkel β zur Axialen A des Fahrzeugluftreifens ein und die Querrillen 15 und 19 der Schulterprofilblockreihe 3 bzw. 7 mit ihrem Erstreckungsverlauf jeweils einen Steigungswinkel α zur Axialen A des Fahrzeugluftreifens ein. Für die Steigungswinkel α, β und γ gilt: γ > β > α., wobei 90° ≥γ ≥70°, 70° ≥ β ≥ 25° und 25° ≥ α ≥ 5°. In einer beispielhaften Ausführung sind die Steigungswinkel α, β und γ wie folgt gewählt:
90° ≥ γ ≥ 80°, 50° ≥ β ≥ 30° und 20° ≥ α ≥ 10°.
In einer beispielhaften Ausführung sind die Steigungswinkel α, β und γ wie folgt gewählt: γ =85°, β = 45° und α = 15°.

Auf diese Weise bilden die Rillen 16 mit den Querrillen 15 und die Rillen 17 mit den Querrillen 19 einen V-förmigen Profilverlauf des Laufstreifenprofils 2 des Fahrzeugluftreifens aus.

Die Profilblockelemente 12 bzw. 13 sind an ihren die Profilrillen 16 bzw. 17 begrenzenden Profilblockelementflanken jeweils im abgeknickten Übergangsbereich zwischen den Rillenabschnitten 16' und 16" bzw. zwischen den Rillenabschnitten 17' zu 17" einen unter einem Krümmungsradius R₁ gekrümmten Flankenverlauf ausgebildet.

Die Profilblockelemente 11 der Profilblockreihe 3 sind an ihrer axial zur Umfangsrille 4 die Profilblockelemente 11 begrenzenden Flanke mit gleicher Neigungsrichtung zur axialen A wie der Flankenverlauf der Profilblockelemente 12 an ihrer den Rillenabschnitt 16' der Rillen 16 begrenzenden Flanke ausgebildet. In einer besonderen in Fig. 1 dargestellten Ausführung sind die Profilblockelemente 11 der Profilblockreihe 3 an ihrer axial zur Umfangsrille 4 die Profilblockelemente 11 begrenzenden Flanke mit einem parallel zum Flankenverlauf der Profilblockelemente 12 an ihrer den Rillenabschnitt 16' der Rillen 16 begrenzenden Flanke ausgebildet. Die Profilblockelemente 14 der Profilblockreihe 7 sind an ihrer axial zur Umfangsrille 6 die Profilblockelemente 14 begrenzenden Flanken mit gleicher Neigungsrichtung zur axialen A wie der Flankenverlauf der Profilblockelemente 13 an ihrer den Rillenabschnitt 17' der Rillen 17 begrenzenden Flanke ausgebildet. In einer besonderen in Fig. 1 dargestellten Ausführung sind die Profilblockelemente 14 der Profilblockreihe 7 an ihrer axial zur Umfangsrille 6 die Profilblockelemente 14 begrenzenden Flanken mit einem parallel zu dem Flankenverlauf der Profilblockelemente 13 an ihrer den Rillenabschnitt 17' der Rillen 17 begrenzenden Flanke ausgebildet.

Die ein Profilblockelement 11 zur Umfangsrille 4 hin jeweils begrenzende Flanke erstreckt sich in Umfangsrichtung U (entgegen der Abrollrichtung F) jeweils bis zur nächsten in Umfangsrichtung U das jeweilige Profilblockelement 11 begrenzenden Querrille 15 bzw. 38. Die ein Profilblockelement 14 zur Umfangsrille 6 hin jeweils begrenzende Flanke erstreckt sich in Umfangsrichtung U (entgegen der Abrollrichtung F) jeweils bis zur nächsten in Umfangsrichtung U das jeweilige Profilblockelement 14 begrenzenden Querrille 18 bzw. 19. In diesen Übergangsbereichen zwischen Umfangsrille 4 und Querrille 38 bzw. 15 sowie zwischen Umfangsrille 6 und Querrille 18 bzw. 19 ist das jeweilige Profilblockelement 11 bzw. 14 mit seinem Flankenverlauf mit einem Krümmungsradius R₂ gekrümmt ausgebildet.

Die Krümmungsradien R₂ und R₁ sind derart gewählt, dass für sie gilt: R₂ ≥ R₁

Die Querrillen 38 enden in ihrer axialen Verlängerung zum Mittenprofilband 5 hin stumpf in der Umfangsrille 4. Ebenso enden die Querrillen 18 der Profilblockreihe 7 in ihrer axialen Verlängerung zum Mittenprofilband 5 hin stumpf in der Umfangsrille 6. Die Querrillen 38 sind in ihrer Erstreckungsrichtung geradlinig verlaufend und parallel zu den Querrillen 15 ausgebildet. Die Querrillen 18 sind ebenfalls in ihrer Erstreckungsrichtung geradlinig und parallel zu den Querrillen 19 verlaufend ausgebildet. Die Querrillen 38 bzw. 18 sind mit einer Breite e, die Querrillen 18 bzw. 15 sind mit einer Breite d ausgebildet, wobei die Breite der Rillen jeweils senkrecht zu ihrer Erstreckungsrichtung und in der radial äußeren Kontaktfläche des Reifens zur Straßenoberfläche gemessen wird Dabei gilt: c < d.

In einer besonderen Ausführung gilt darüber hinaus e < d, wobei (0,3 d) < e < (0,95 d).

Wie in Fig. 2 dargestellt, erstrecken sich die Profilblockelemente 33 der Schulterprofilblockreihe 3 in axialer Richtung innerhalb der Aufstandsbreite TA ausgehend vom in Fig. 2 links eingezeichneten Erstreckungsrand der Aufstandsbreite TA in axialer Richtung bis zur Umfangsrille 4 über eine maximale axiale Erstreckung der Breite D. Ebenso erstrecken sich die in Profilblockelemente 33 der Schulterprofilblockreihe 7 innerhalb der Aufstandsbreite TA ausgehend vom rechts eingetragenen Rand der Aufstandsbreite TA in axialer Richtung bis zur Umfangsrille 6 über eine maximale axiale Erstreckung der Breite D.

Die Profilblockelemente 12 sowie die Profilblockelemente 13 erstrecken sich in axialer Richtung jeweils über eine maximale axiale Erstreckung der Breite C. Die Profilrippe 5 erstreckt sich in axialer Richtung über eine maximale axiale Erstreckung der Breite B. Die axialen Breiten B, C und D sind die Breiten in der radial äußeren Mantelfläche des Fahrzeugluftreifens, die die Kontaktfläche zur Straßenoberfläche darstellt. Die axialen Breiten B, C und D entsprechen dabei jeweils den axialen Erstreckungsbreiten, die sich bei Projektion des jeweiligen Profilblockelements 11, 14, 12, 13 bzw. der Profilrippe 9 in Umfangsrichtung des Fahrzeugluftreifens ergibt.

Die Profilblockelemente 11 und 14 der Schulterprofilblockreihen 3 und 7, die Profilblockelemente 12 und 13 und die Profilrippe 9 sind dabei so ausgelegt, dass für die Breiten ihrer maximalen axialen Erstreckung gilt: D > C > B mit B ≤ (0,18 TA).

Die Profilblockelemente 11 der Schulterprofilblockreihe 3 sind ebenso wie die Profilblockelemente 14 der Schulterprofilblockreihe 7 jeweils mit einem Feineinschnittgitter 21 bestehend aus in dem jeweiligen Profilblockelement 11 bzw. 14 parallel zueinander ausgerichteten in axialer Richtung A des Fahrzeugluftreifens äquidistant beabstandeten Feineinschnitten 23 und aus ebenfalls innerhalb des Profilblockelementes 11 bzw. 14 jeweils parallel zueinander ausgerichteten Feineinschnitten 24 ausgebildet. Die Feineinschnitte 23 sind längs ihrer Erstreckung in Richtung der eingetragenen Umfangsrichtung U (d.h. entgegen der Abrollrichtung F) gesehen zusätzlich mit einer axialen Richtungskomponente in Richtung des Kronenbereichs des Fahrzeugluftreifens und somit zur Umfangsrippe 9 hin unter Einschluss eines Steigungswinkels δ₁ zur Axialen A ausgebildet, wobei für δ₁ gilt: 50° ≤ δ₁ < 85°.

In besonderer Ausbildung gilt für δ₁: 55° ≤ δ₁ ≤ 80°. Beispielsweise ist δ₁ derart gewählt, dass δ₁ = 60°. Die Feineinschnitte 24 schließen einen Steigungswinkel ε₁ zum Erstreckungsrichtung der Feineinschnitte 23 innerhalb eines Profilblockelementes 11 bzw. 14 ein, für den gilt: 30° ≤ ε₁≤ 150°. In einer besonderen Ausführung gilt: 80° ≤ ε₁ ≤ 100°. Der Winkel ε₁ ist dabei ausgehend vom Schnittpunkt des jeweiligen Feineinschnitts 24 mit dem Feineinschnitt 23 von der vom Schnittpunkt in Umfangsrichtung U weisenden Erstreckungsstrahl des Feineinschnittes 23 in Richtung der Umfangsprofilrippe 9 gedreht.

Wie in Fig. 2 dargestellt ist, ist in einer besonderen Ausführung ε₁ ein spitzer Winkel mit 75° ≤ε₁ ≤ 85°. Beispielsweise ist ε₁ derart ausgewählt, dass ε₁= 80°.

Dabei sind die Feineinschnitte 24 derart im jeweiligen Profilblockelement 11 bzw. 14 angeordnet, dass jeder Feineinschnitt 23 mit seinem axial benachbarten Feineinschnitt 23 jeweils durch N Feineinschnitte 24 miteinander verbunden sind. Der in den Profilblockelementen 11 der Profilblockreihe 3 zur Umfangsrille 4 sowie der in den Profilblockelementen 14 der Profilblockreihe 7 zur Umfangsrille 6 hin jeweils nächstliegende Feineinschnitt 23 ist jeweils mit der entsprechend axial benachbarten Umfangsrille 4 bzw. 6 ebenfalls durch N Feineinschnitte 24 verbunden. Innerhalb eines Profilblockelementes 11 bzw. 14 sind die zwischen zwei benachbarten Feineinschnitten 23 bzw. zwischen dem der axial benachbarten Umfangsrille 4 bzw. 6 nächstliegenden Feineinschnitt 23 und der Umfangsrille 4 bzw. 6 jeweils ausgebildeten N Feineinschnitte 24 jeweils mit gleichem Abstand k₁ zu dem in Erstreckungsrichtung der Feineinschnitte 23 nächstliegenden Feineinschnitt 24 ausgebildet, wobei der Abstand k₁ in Erstreckungsrichtung der Feineinschnitte 23 des jeweiligen Profilblockelementes 11 bzw. 14 gemessen wird. Die benachbarten Feineinschnitte 23 eines Profilblockelementes 11 bzw. eines Profilblockelementes 14 sind innerhalb eines Profilblockelementes 11 bzw. 14 jeweils mit gleichem Abstand m₁ zueinander ausgebildet, wobei der Abstand m₁ in Erstreckungsrichtung der Feineinschnitte 24 des Profilblockelementes 11 bzw. 14 gemessen wird.

Für die Abstände k₁ und m₁ gilt: k₁ < m₁. In einer besonderen Ausführung gilt: (1,2m₁) ≤ k₁ ≤ (1,8m₁). In einem Ausführungsbeispiel ist gewählt: k₁ = (1,5m₁).

Innerhalb eines Profilblockelements 11 bzw. 14 sind dabei die jeweils die von der axialen Innenseite des Fahrzeugluftreifens in einen Feineinschnitt 23 mündenden Feineinschnitte 21 gegenüber den von der axialen Außenseite des Fahrzeugluftreifens in den Feineinschnitt 23 mündenden Feineinschnitten 24 in Umfangsrichtung U, d.h. entgegen der Abrollrichtung F, gerichteter Sicht, um einen Abstand n versetzt, wobei das Maß n₁ in Richtung der Erstreckungsrichtung des jeweiligen Feineinschnitts 23 gemessen wird. Dabei gilt: 0 < n₁< k₁. In einer besonderen Ausführung gilt: 0 < n₁≤ (0,4 k₁). In einem Ausführungsbeispiel ist gewählt: n₁ = (0,25 k₁).

Jeder Feineinschnitt 23 des Feineinschnittgitters 21 ist dabei jeweils so ausgebildet, dass an dem in Umfangsrichtung U gesehenen Anfang als auch an dem in Umfangsrichtung U gesehenen Ende eines Feineinschnitts 23 jeweils ein Feineinschnitt 24 in den Feineinschnitt 23 mündet.

Die Feineinschnittgitter 21 bilden auf diese Weise ein Gitter aus von durch die Feineinschnitte 23 und 24 gebildeten Gitterlinien mit von den Gitterlinien jeweils umschlossenen Profilblockausschnittselementen 27.

Die Feineinschnittsgitter 21 sind dabei derart in den Profilblockelementen 11 bzw. 14 der Profilblockreihen 3 bzw. 7 angeordnet, dass in Umfangsrichtung U gesehen jeweils vor- und hinter dem Feineinschnittsgitter ein feineinschnittsfreier über die gesamte axiale Erstreckung des Profilblockelements 11 bzw. 14 erstreckter Umfangsabschnitt 33 bzw. 34 des Profilblockelements 11 bzw. 14 der Umfangslänge w₁ mit w₁ > 0mm mit einer lamellenfreier Fläche F_{D} verbleibt, der das Feineinschnittgitter 21 in Umfangsrichtung von den das jeweilige Profilblockelement 11 bzw. 14 begrenzenden Querrillen 15 und 38 bzw. 18 und 19 trennt. In einer besonderen Ausführung gilt: (1,15 k₁) ≤ w₁ ≤ (1,5 k₁).

Die Profilblockelemente 12 der Profilblockreihe 8 sind ebenso wie die Profilblockelemente 13 der Profilblockreihe 10 jeweils mit einem Feineinschnittgitter 22 bestehend aus in dem jeweiligen Profilblockelement 12 bzw. 13 parallel zueinander ausgerichteten in axialer Richtung A des Fahrzeugluftreifens äquidistant beabstandeten Feineinschnitten 25 und aus ebenfalls innerhalb des Profilblockelementes 12 bzw. 13 jeweils parallel zueinander ausgerichteten Feineinschnitten 26 ausgebildet. Die Feineinschnitte 25 sind längs ihrer Erstreckung in Richtung der eingetragenen Umfangsrichtung U (d.h. entgegen der Abrollrichtung F) gesehen zusätzlich mit einer axialen Richtungskomponente in Richtung des Kronenbereichs des Fahrzeugluftreifens und somit zur Umfangsrippe 9 hin unter Einschluss eines Steigungswinkels δ₂ zur Axialen A ausgebildet, wobei für δ₂ gilt: 50°≤δ₂ ≤90°.

In besonderer Ausbildung gilt für δ₂: 55° ≤δ₂ ≤85°. Beispielsweise ist δ₂ derart gewählt, dass δ₂ = 80°. Die Feineinschnitte 26 schließen einen Steigungswinkel ε₂ zum Erstreckungsrichtung der Feineinschnitte 25 innerhalb eines Profilblockelementes 12 bzw. 13 ein, für den gilt: 30° ≤ ε₂ ≤ 150°. In einer besonderen Ausführung gilt: 80° ≤ ε₂ ≤ 120°. In einer Ausführung ist ε₂ beispielsweise mit ε₂ = 115° gewählt. Der Winkel ε₂ ist dabei ausgehend vom Schnittpunkt des jeweiligen Feineinschnitts 26 mit dem Feineinschnitt 25 von der vom Schnittpunkt in Umfangsrichtung U weisenden Erstreckungsstrahl des Feineinschnittes 25 in Richtung der Umfangsprofilrippe 9 gedreht.

Dabei sind die Feineinschnitte 26 derart im jeweiligen Profilblockelement 12 bzw. 13 angeordnet, dass jeder Feineinschnitt 25 mit seinem axial benachbarten Feineinschnitt 25 jeweils durch N Feineinschnitte 26 miteinander verbunden sind. Der in den Profilblockelementen 12 der Profilblockreihe 8 jeweils zur Umfangsrille 4 und zum Rillenabschnitt 16' sowie der in den Profilblockelementen 13 der Profilblockreihe 10 jeweils zur Umfangsrille 6 und zum Rillenabschnitt 17' hin jeweils nächstliegende Feineinschnitt 25 ist jeweils mit der entsprechend axial benachbarten Umfangsrille 4, dem Rillenabschnitt 16', der Umfangsrille 6 bzw. dem Rillenabschnitt 17' ebenfalls durch N Feineinschnitte 26 verbunden. Innerhalb eines Profilblockelementes 12 bzw. 13 sind die zwischen zwei benachbarten Feineinschnitten 25 bzw. zwischen dem der axial benachbarten Umfangsrille 4, dem Rillenabschnitt 16', der Umfangsrille 6 bzw. dem Rillenabschnitt 17' nächstliegenden Feineinschnitt 25 und der Umfangsrille 4, dem Rillenabschnitt 16', der Umfangsrille 6 bzw. dem Rillenabschnitt 17' jeweils ausgebildeten N Feineinschnitte 26 jeweils mit gleichem Abstand k₂ zu dem in Erstreckungsrichtung der Feineinschnitte 25 nächstliegenden Feineinschnitt 26 ausgebildet, wobei der Abstand k₂ in Erstreckungsrichtung der Feineinschnitte 25 des jeweiligen Profilblockelementes 12 bzw. 13 gemessen wird. Die benachbarten Feineinschnitte 25 eines Profilblockelementes 12 bzw. eines Profilblockelementes 13 sind innerhalb eines Profilblockelementes 12 bzw. 13 jeweils mit gleichem Abstand m₁ zueinander ausgebildet, wobei der Abstand m₂ in Erstreckungsrichtung der Feineinschnitte 26 des Profilblockelementes 12 bzw. 13 gemessen wird.

Für die Abstände k₂ und m₂ gilt: k₂ ≤ m₂. In einer besonderen Ausführung gilt: k₂ = m₂.

Für die Abstände k₂ und k₁ gilt: k₁ ≤ k₂. In einer besonderen Ausführung gilt:
k₁ ≤ k₂ ≤5 (1,15 k₁).

Innerhalb eines Profilblockelements 12 bzw. 13 sind dabei die jeweils die von der axialen Innenseite des Fahrzeugluftreifens in einen Feineinschnitt 25 mündenden Feineinschnitte 22 gegenüber den von der axialen Außenseite des Fahrzeugluftreifens in den Feineinschnitt 25 mündenden Feineinschnitten 26 in Umfangsrichtung U, d.h. entgegen der Abrollrichtung F, gerichteter Sicht, um einen Abstand n₂ versetzt, wobei das Maß n₂ in Richtung der Erstreckungsrichtung des jeweiligen Feineinschnitts 25 gemessen wird. Dabei gilt: 0 < n₂ < k₂ . In einer besonderen Ausführung gilt: 0 < n₂ ≤ (0,4 k₂). In einem Ausführungsbeispiel ist gewählt: n₂ = (0,25 k₂).

Für die Absätze n₂ und n₁ gilt: n₁ ≤ n₂. In einer besonderen Ausführung gilt: n₂ = n₁.

Jeder Feineinschnitt 25 des Feineinschnittgitters 22 ist dabei jeweils so ausgebildet, dass an dem in Umfangsrichtung U gesehenen Anfang als auch an dem in Umfangsrichtung U gesehenen Ende eines Feineinschnitts 25 jeweils ein Feineinschnitt 26 in den Feineinschnitt 25 mündet.

Die Feineinschnittgitter 22 bilden auf diese Weise ein Gitter aus von durch die Feineinschnitte 25 und 26 gebildeten Gitterlinien mit von den Gitterlinien jeweils umschlossenen Profilblockausschnittselementen 27.

Die Feineinschnittsgitter 22 sind dabei derart in den Profilblockelementen 12 bzw. 13 der Profilblockreihen 8 bzw. 10 angeordnet, dass in Umfangsrichtung U gesehen jeweils vor- und hinter dem Feineinschnittsgitter ein feineinschnittsfreier über die gesamte axiale Erstreckung des Profilblockelements 12 bzw. 13 erstreckter Umfangsabschnitt 35 bzw. 37 des Profilblockelements 12 bzw. 13 der Umfangslänge w₂ mit w₂ > 0mm mit einer lamellenfreier Fläche F_{C} verbleibt, der das Feineinschnittgitter 22 in Umfangsrichtung jeweils von den das jeweilige Profilblockelement 12 bzw. 13 begrenzenden Rillenbereiche 16" bzw. 17" trennt. In einer besonderen Ausführung gilt: (1,15 k₂) ≤ w₂ ≤(1,5 k₂).

Dabei sind in den Profilblockelementen 12 bzw. 13 jeweils 2 derartige in Umfangsrichtung hintereinander angeordnete Feineinschnittgitter 22 ausgebildet, wobei zwischen diesen beiden Feineinschnittgittern 22 eines Profilblockelementes 12 bzw. 13 jeweils ein sich über die gesamte axiale Erstreckung des Profilblockelements erstreckter feineinschnittsfreier Bereich 36 der Umfangslänge w₃ mit w₃ > 0mm der Fläche F_{C} ausgebildet ist. In einer besonderen Ausführung gilt: (1,15 k₂) ≤ w₃ ≤ (1,5 k₂).

Für die feineinschnittsfreien Bereiche 33 und 34 der Profilblockelemente 11 bzw. 14 mit ihren innerhalb der axialen Erstreckung der Bodenaufstandsfläche TW ausgebildeten feineinschnittsfreien Flächen F_{D} und für die feineinschnittsfreie Bereiche 35, 36, 37 mit ihren feineinschnittsfreien Flächen F_{C} der Profilblockelemente 12 und 13 gilt:
(0,9 F_{C}) < F_{D} < (1,7 F_{C}.)

Im Umfangserstreckungsbereich, der die beiden Feineinschnittsgitter 22 eines Profilblockelementes 12 bzw. 13 jeweils trennenden feineinschnittsfreien Fläche 36 weist die das jeweilige Profilblockelement 35 bzw. 36 zu der jeweils nach axial außen hin angrenzenden Umfangsrille 4 bzw. 6 begrenzenden Profilblockelementflanke einen in Umfangsrichtung U (d.h. entgegen der Abrollrichtung F) gesehenen axialen Versatz in Richtung der Profilrippe 9 hin auf. In Umfangsrichtung U vor und hinter dem kurzen Abschnitt des axialen Versatzes ist diese Profilblockelementflanke in Umfangrichtung U gesehen jeweils mit einer von der Profilrippe 9 wegweisenden axialen Richtungskomponente ausgebildet. Auf diese Weise ist die jeweilige Umfangsrille 4 und 6 an ihrer nach axial innen zur Profilrippe 9 gerichteten Rillenwand über den Umfang des Fahrzeugluftreifens gesehen zickzackförmig ausgebildet.

Die Profilrippe 9 ist mit einem Feineinschnittsgitter 29 aus in Umfangsrichtung hintereinander angeordneten parallelen äquidistant zueinander ausgebildeten ersten Feineinschnitten 31, die sich über die gesamte axiale Erstreckung der Profilrippe 9 hin erstrecken und die im axial äußeren Erstreckungsbereich jeweils nahezu achsparallel und in einem zwischen diesen beiden axialen Erstreckungsbereichen axialen Erstreckungsbereich mit größerer Umfangskomponente in ihrem Richtungsverlauf ausgebildet sind, und mit jeweils zwei zueinander parallelen Feineinschnitten 30, die jeweils zwei der in Umfangsrichtung hintereinander angeordnete Feineinschnitte 31 verbinden, ausgebildet. Jeder Feineinschnitt 30 mündet dabei in einen Feineinschnitt 31 im Bereich dessen geradlinig ansteigenden axialen Zwischenerstreckungsbereichs mit größerer Umfangsrichtungskomponente und mit seinem anderen Ende in einen anderen Feineinschnitt 31 an dessen Knickstelle beim Übergang zwischen nahezu achsparallelen Randbereich in den axialen Zwischenerstreckungsbereich mit größerer Umfangskomponente.

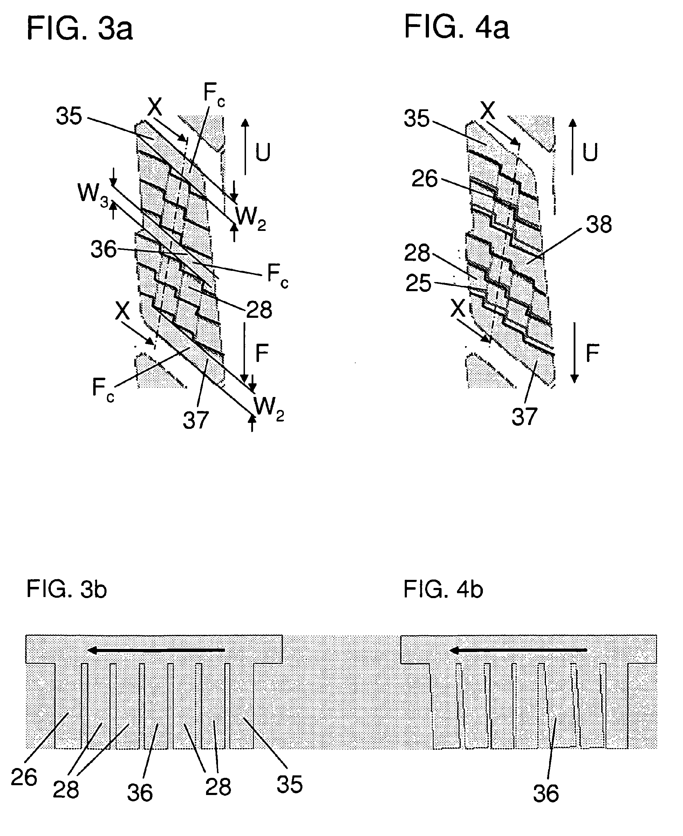

Die Figuren 3a und 3b zeigen am Beispiel eines Profilblockelementes 12 den Zustand des Profilblockelementes im Normzustand des Fahrzeugluftreifens außerhalb des Reifenlatsches. Die Figuren 4a und 4b zeigen das gleiche Profilblockelement 12 beim Durchlaufen des Reifenlatsches.

Dabei zeigen die Figuren 3b bzw. 4b einen Schnitt längs der Darstellung X-X der jeweiligen Figur 3a bzw. 4a. Dabei ist deutlich erkennbar, dass beim Abrollen des Profilblockelements 12 die vom Feineinschnittsgitter 22 umrahmten beiderseits eines Feineinschnitts 25 angeordneten Profilblockausschnittselemente 28 längs des Feineinschnitts 25 aneinander vorbeigleitend den Belastungen ausweichen, wodurch sich die Feineinschnitte 26 unter Bildung von Öffnungsspalten öffnen. Aufgrund Ihrer erhöhten Steifigkeit bleiben die feineinschnittsfreien Bereiche 35, 38 und 37 demgegenüber in ihrer Position weitgehend unverändert. Wie in Fig. 4b deutlich zu erkennen ist, bilden sich dabei insbesondere je nach Abrollrichtung zwischen den feineinschnittfreien Bereichen 35, 38 und 37 und den unmittelbar in Umfangsrichtung benachbarten Profilblockausschnittselementen 28 besonders große Öffnungsspalten zur Aufnahme von Schnee.

Wie Fig. 2 zu entnehmen ist, sind dabei sowohl in den Profilblockreihen 3 und 7 mit den Profilblockelementen 11 und 14 als auch bei den Profilblockelementen 12 und 13 Profilblockelemente ausgebildet, bei denen die Feineinschnittsgitter 21 bzw. 22 jeweils Gitterstrukturen mit in Umfangsrichtung jeweils hintereinander ausgebildeten Profilblockausschnittselementen 27 bzw. 28 aufweisen (N > 2, z.B. N=3), als auch Profilblockelemente mit Feineinschnittsgittern 21 bzw. 22, bei denen lediglich ein Profilblockausschnittselement in Umfangsrichtung ausgebildet ist (N=2).

### Bezugszeichenliste

### (Teil der Beschreibung)

- 1: Fahrzeugluftreifen
- 2: Laufstreifenprofil
- 3: Schulterprofilblockreihe
- 4: Umfangsrille
- 5: Mittenprofilband
- 6: Umfangsrille
- 7: Schulterprofilblockreihe
- 8: Profilblockreihe
- 9: Profilrippe
- 10: Profilblockreihe
- 11: Profilblockelement
- 12: Profilblockelement
- 13: Profilblockelement
- 14: Profilblockelement
- 15: Querrille
- 16: Querrille
- 17: Querrille
- 18: Querrille
- 19: Querrille
- 20: Entkopplungsspalt
- 21: Feineinschnittgitter
- 22: Feineinschnittgitter
- 23: Feineinschnitt
- 24: Feineinschnitt
- 25: Feineinschnitt
- 26: Feineinschnitt
- 27: Profilblockauschnittselement
- 28: Profilblockausschnittselement
- 29: Feineinschnittgitter
- 30: Feineinschnitt
- 31: Feineinschnitt
- 32: Profilblockauschnittselement
- 33: Rahmen
- 34: Rahmen
- 35: Rahmen
- 36: Rahmen
- 37: Rahmen
- 38: Querrille

## Patentansprüche

1. Laufstreifenprofil eines Fahrzeugreifens - insbesondere eines Winterreifens - mit in radialer Richtung des Fahrzeugreifens erhabenen Profilelementen (11,12,13,14), mit einem Flächenbereich in der radial nach außen gerichteten Oberfläche des Profilelementes (11,12,13,14) mit mehreren nebeneinander angeordneten durch ein gitterförmiges Feineinschnittsystem (21,22) voneinander getrennten Profilementabschnitten (27,28), wobei das gitterförmige Feineinschnittsystem (21,22) aus mehreren geradlinigen, zu einander parallelen ersten Feineinschnitten (23,25) und aus weiteren Feineinschnitten (24,26) ausgebildet ist,
**dadurch gekennzeichnet,**
**dass** jeder erste Feineinschnitt (23,25) durch N mit N ≥ 2 weitere Feineinschnitte (24,26) mit seinem jeweils benachbarten ersten Feineinschnitt (23,25) verbunden ist und Profilelementabschnitte (27,28) jeweils vollständig von ersten Feineinschnitten (23,25) und weiteren Feineinschnitten (24,26) umschlossenen ausgebildet sind, wobei die geradlinigen, parallelen ersten Feineinschnitte (23,25) in ihrer Ausrichtung mit ihrer größten Richtungskomponente in Umfangsrichtung des Fahrzeugluftreifens ausgebildet sind und wobei die weiteren Feineinschnitte (24,26) in ihrer Schnittstelle mit einem ersten Feineinschnitt (23,25) jeweils mit einem Versatz in Erstreckungsrichtung des ersten Feineinschnitts (23,25) ausgebildet sind.

2. Laufstreifenprofil gemäß den Merkmalen von Anspruch 1,
wobei auch die weiteren Feineinschnitte (24,26) zumindest in ihrem Erstreckungsbereich zwischen jeweils benachbarten ersten Feineinschnitten (23,25) geradlinig verlaufend ausgebildet sind.

3. Laufstreifenprofil gemäß den Merkmalen von einem oder mehreren der vorangegangenen Ansprüche,
wobei auch die weiteren Feineinschnitte (24,26) zumindest in ihrem Erstreckungsbereich zwischen jeweils benachbarten ersten Feineinschnitten (23,25) parallel zueinander verlaufend ausgebildet sind.

4. Laufstreifenprofil gemäß den Merkmalen von einem oder mehreren der vorangegangenen Ansprüche,
wobei die weiteren Feineinschnitte (24,26) zumindest in ihrem Erstreckungsbereich zwischen jeweils benachbarten ersten Feineinschnitten (23,25) in ihrer Ausrichtung ihre größte Richtungskomponente in axialer Richtung des Fahrzeugluftreifens aufweisen.

5. Laufstreifenprofil gemäß den Merkmalen von Anspruch 1,
wobei der Versatz der weiteren Feineinschnitte (24,26) innerhalb eines gitterförmigen Feineinschnittsystems (21,22) jeweils mit gleicher Orientierungsrichtung der ersten Feineinschnitte (23,25) ausgebildet ist.

6. Laufstreifenprofil gemäß den Merkmalen von Anspruch 1 oder 4,
wobei der Versatz der weiteren Feineinschnitte (24,26) innerhalb eines gitterförmigen Feineinschnittsystems (21,22) jeweils mit gleichem Maß der Versatzlänge ausgebildet ist.

7. Laufstreifenprofil gemäß den Merkmalen von einem oder mehreren der vorangegangenen Ansprüche,
wobei die Abstände zwischen jeweils zwei benachbarten ersten Feineinschnitten (24,26) eines Feineinschnittgitters (21,22) gleich groß ausgebildet sind.

8. Laufstreifenprofil gemäß den Merkmalen von einem oder mehreren der vorangegangenen Ansprüche,
wobei die ersten Feineinschnitte (24,26) in ihrer Ausrichtung einen Winkel δ (δ₁,δ₂) zur axialen Richtung des Fahrzeugluftreifens einschließen mit 5° ≤ δ ≤ 40°, insbesondere mit 10° ≤ δ≤ 35°.

9. Laufstreifenprofil gemäß den Merkmalen von einem oder mehreren der vorangegangenen Ansprüche,
wobei das erhabene Profilelement (11,12,13,14) ein Profilblockelement einer in Umfangsrichtung des Fahrzeugluftreifens gerichteten über den gesamten Umfang des Fahrzeugluftreifens erstreckten Profilblockreihe (3,8,10,7) ist.

10. Laufstreifenprofil gemäß den Merkmalen von einem oder mehreren der vorangegangenen Ansprüche,
wobei im Laufstreifenprofil mehrere derartige radial erhabene Profilelemente (11,12,13,14) in unterschiedlichen axialen Positionen des Fahrzeugluftreifens ausgebildet sind, die jeweils ein Profilblockelement einer in Umfangsrichtung des Fahrzeugluftreifens gerichteten über den gesamten Umfang des Fahrzeugluftreifens erstreckten Profilblockreihe(3,8,10,7) ist.

11. Laufstreifenprofil gemäß den Merkmalen von einem oder mehreren der vorangegangenen Ansprüche,
wobei im Laufstreifenprofil mehrere derartige radial erhabene Profilelemente (11,12,13,14) in unterschiedlichen axialen Positionen des Fahrzeugluftreifens ausgebildet sind, wobei bei dem im Fahrzeugluftreifen axial äußeren erhabenen Profilelementen (11,14) die Abstände zwischen jeweils zwei benachbarten ersten Feineinschnitten (23) des Feineinschnittgitters (21) größer als bei den axial weiter innen angeordneten radial erhabenen Profilelementen (12,13,9) ausgebildet sind.

12. Laufstreifenprofil gemäß den Merkmalen von Anspruch 11,
wobei die Abstände der benachbarten ersten Feineinschnitte (23) eines Feineinschnittgitters (21) im Reifenschulterbereich 1,5 bis 2,0 mal so groß ausgebildet sind wie die Abstände der benachbarten ersten Feineinschnitte (25) eines Feineinschnittgitters (22) im Kronenbereich des Fahrzeugreifens.

13. Laufstreifenprofil gemäß den Merkmalen von Anspruch 11,
wobei die Abstände benachbarter erster Feineinschnitte eines Feineinschnittgitters in axial zwischen erhabenen Profilelementen (11,14) im Reifenschulterbereich und Profilelementen im Reifenkronenbereich ausgebildeten weiteren erhabenen Profilelementen kleiner als die Abstände der benachbarten ersten Feineinschnitte (23) eines Feineinschnittgitters (21) im Reifenschulterbereich und größer als die Abstände benachbarter erster Feineinschnitte eines Feineinschnittgitters im Kronenbereich ausgebildet sind.

14. Laufstreifenprofil gemäß den Merkmalen von Anspruch 13,
wobei die Abstände benachbarter erster Feineinschnitte eines Feineinschnittgitters in axial zwischen erhabenen Profilelementen (11,14) im Reifenschulterbereich und Profilelementen im Reifenkronenbereich ausgebildeten weiteren erhabenen Profilelementen 1,2 bis 1,6 mal so groß ausgebildet sind wie die Abstände der benachbarten ersten Feineinschnitte eines Feineinschnittgitters im Kronenbereich des Fahrzeugreifens.

## Claims

1. Tread profile of a vehicle tyre, in particular of a snow tyre, having profile elements (11,12,13,14) raised in the radial direction of the vehicle tyre, having a region in the radially outwardly directed surface of the profile element (11,12,13,14) with a plurality of profile element portions (27,28) arranged next to one another and separated from one another by a grid-type system of fine incisions (21,22), the grid-type system of fine incisions (21,22) taking the form of a plurality of straight, mutually parallel first fine incisions (23,25) and of further fine incisions (24,26), **characterized in that** each first fine incision (23,25) is connected by N, with N ≥ 2, further fine incisions (24,26) to its in each case neighbouring first fine incision (23,25) and profile element portions (27,28) being constructed to be in each case completely surrounded by first fine incisions (23,25) and further fine incisions (24,26), the straight, parallel first fine incisions (23,25) being oriented with their major direction component in the circumferential direction of the vehicle pneumatic tyre and the further fine incisions (24,26) being constructed at their point of intersection with a first fine incision (23,25) in each case with an offset in the direction of extension of the first fine incision (23,25).

2. Tread profile according to the features of Claim 1, wherein the further fine incisions (24,26) are also of straight construction at least in their area of extension between in each case neighbouring first fine incisions (23,25).

3. Tread profile according to the features of one or more of the preceding claims, wherein the further fine incisions (24,26) are also of mutually parallel construction at least in their area of extension between in each case neighbouring first fine incisions (23,25).

4. Tread profile according to the features of one or more of the preceding claims, wherein the further fine incisions (24,26) are oriented with their major direction component in the axial direction of the vehicle pneumatic tyre at least in their area of extension between in each case neighbouring first fine incisions (23,25).

5. Tread profile according to the features of Claim 1, wherein the offset of the further fine incisions (24,26) within a grid-type system of fine incisions (21,22) is configured in each case with the same direction of orientation as the first fine incisions (23,25).

6. Tread profile according to the features of Claim 1 or 4, wherein the offset of the further fine incisions (24,26) within a grid-type system of fine incisions (21,22) is configured in each case with the same degree of offset length.

7. Tread profile according to the features of one or more of the preceding claims, wherein the distances between in each case two neighbouring first fine incisions (24,26) of a fine-incision grid (21,22) are of equal size.

8. Tread profile according to the features of one or more of the preceding claims, wherein the first fine incisions (24,26) are oriented at an angle δ (δ₁,δ₂) to the axial direction of the vehicle pneumatic tyre, with 5° ≤ δ ≤ 40°, in particular with 10° ≤ δ ≤ 35°.

9. Tread profile according to the features of one or more of the preceding claims, wherein the raised profile element (11,12,13,14) is a profile block element of a profile block row (3,8,10,7) directed in the circumferential direction of the vehicle pneumatic tyre and extending over the entire circumference of the vehicle pneumatic tyre.

10. Tread profile according to the features of one or more of the preceding claims, wherein, in the tread profile, a plurality of such radially raised profile elements (11,12,13,14) are constructed at different axial positions of the vehicle pneumatic tyre, these being in each case a profile block element of a profile block row (3,8,10,7) directed in the circumferential direction of the vehicle pneumatic tyre and extending over the entire circumference of the vehicle pneumatic tyre.

11. Tread profile according to the features of one or more of the preceding claims, wherein, in the tread profile, a plurality of such radially raised profile elements (11,12,13,14) are constructed at different axial positions of the vehicle pneumatic tyre, wherein the distances between in each case two neighbouring first fine incisions (23) of the fine incision grid (21) are greater in the case of the axially outer raised profile elements (11,14) in the vehicle pneumatic tyre than in the case of the radially raised profile elements (12,13,9) arranged axially further inwards.

12. Tread profile according to the features of Claim 11, wherein the distances between the neighbouring first fine incisions (23) of a fine incision grid (21) in the tyre shoulder area are 1.5 to 2.0 times as great as the distances between the neighbouring first fine incisions (25) of a fine incision grid (22) in the crown area of the vehicle tyre.

13. Tread profile according to the features of Claim 11, wherein the distances between neighbouring first fine incisions of a fine incision grid in further raised profile elements constructed axially between raised profile elements (11,14) in the tyre shoulder area and profile elements in the tyre crown area are smaller than the distances between the neighbouring first fine incisions (23) of a fine incision grid (21) in the tyre shoulder area and greater than the distances between neighbouring first fine incisions of a fine incision grid in the crown area.

14. Tread profile according to the features of Claim 13, wherein the distances between neighbouring first fine incisions of a fine incision grid in further raised profile elements constructed axially between raised profile elements (11,14) in the tyre shoulder area and profile elements in the tyre crown area are 1.2 to 1.6 times as great as the distances between the neighbouring first fine incisions of a fine incision grid in the crown area of the vehicle tyre.

## Revendications

1. Profilé de bande de roulement d'un pneumatique de véhicule - en particulier d'un pneu-neige - comprenant des éléments profilés (11, 12, 13, 14) rehaussés dans la direction radiale du pneumatique du véhicule, une région de surface dans la surface de l'élément profilé (11, 12, 13, 14) orientée radialement vers l'extérieur avec plusieurs portions d'élément profilé (27, 28) disposées les unes à côté des autres et séparées les unes des autres par un système de fines entailles en forme de grille (21, 22), le système de fines entailles en forme de grille (21, 22) étant constitué de plusieurs premières fines entailles rectilignes (23, 25) parallèles les unes aux autres et de fines entailles supplémentaires (24, 26),
**caractérisé en ce que**
chaque première fine entaille (23, 25) est connectée par N fines entailles supplémentaires (24, 26), avec N ≥ 2, à sa première fine entaille respectivement adjacente (23, 25), et des portions d'élément profilé (27, 28) étant entourées à chaque fois complètement par des premières fines entailles (23, 25) et des fines entailles supplémentaires (24, 26), les premières fines entailles rectilignes et parallèles (23, 25) étant réalisées dans leur orientation avec leur plus grande composante de direction dans la direction périphérique du pneumatique du véhicule, et les fines entailles supplémentaires (24, 26) étant réalisées dans leur interface avec une première fine entaille (23, 25) à chaque fois avec un décalage dans la direction de l'étendue de la première fine entaille (23, 25).

2. Profilé de bande de roulement selon les caractéristiques de la revendication 1,
dans lequel les fines entailles supplémentaires (24, 26) sont également réalisées au moins dans leur région d'étendue entre à chaque fois des premières fines entailles adjacentes (23, 25) de manière à s'étendre en ligne droite.

3. Profilé de bande de roulement selon les caractéristiques d'une ou de plusieurs des revendications précédentes,
dans lequel les fines entailles supplémentaires (24, 26) sont également réalisées au moins dans leur région d'étendue entre à chaque fois des premières fines entailles adjacentes (23, 25) de manière à s'étendre parallèlement les unes aux autres.

4. Profilé de bande de roulement selon les caractéristiques d'une ou de plusieurs des revendications précédentes,
dans lequel les fines entailles supplémentaires (24, 26), au moins dans leur région d'étendue entre à chaque fois des premières fines entailles adjacentes (23, 25), présentent dans leur orientation, leur plus grande composante de direction dans la direction axiale du pneumatique du véhicule.

5. Profilé de bande de roulement selon les caractéristiques de la revendication 1,
dans lequel le décalage des fines entailles supplémentaires (24, 26) est réalisé à l'intérieur d'un système de fines entailles en forme de grille (21, 22) à chaque fois avec une direction d'orientation identique aux premières fines entailles (23, 25).

6. Profilé de bande de roulement selon les caractéristiques de la revendication 1 ou 4,
dans lequel le décalage des fines entailles supplémentaires (24, 26) est réalisé à l'intérieur d'un système de fines entailles en forme de grille (21, 22) à chaque fois avec la même dimension de longueur de décalage.

7. Profilé de bande de roulement selon les caractéristiques de l'une ou plusieurs des revendications précédentes,
dans lequel les distances entre à chaque fois deux premières fines entailles adjacentes (23, 25) d'une grille de fines entailles (21, 22) sont identiques.

8. Profilé de bande de roulement selon les caractéristiques de l'une ou plusieurs des revendications précédentes,
dans lequel les premières fines entailles (23, 25) forment dans leur orientation un angle δ (δ₁, δ₂) par rapport à la direction axiale du pneumatique du véhicule, avec 5° ≤ δ ≤ 40°, en particulier avec 10° ≤ δ ≤35°.

9. Profilé de bande de roulement selon les caractéristiques de l'une ou plusieurs des revendications précédentes,
dans lequel l'élément profilé rehaussé (11, 12, 13, 14) est un élément de bloc profilé d'une rangée de blocs profilés (3, 8, 10, 7) orientée dans la direction périphérique du pneumatique du véhicule et s'étendant sur toute la périphérie du pneumatique du véhicule.

10. Profilé de bande de roulement selon les caractéristiques de l'une ou plusieurs des revendications précédentes,
dans lequel, dans le profilé de bande de roulement, plusieurs de ces éléments profilés rehaussés radialement (11, 12, 13, 14) sont réalisés dans des positions axiales différentes du pneumatique du véhicule, ce qui est à chaque fois un élément de bloc profilé d'une rangée de blocs profilés (3, 8, 10, 7) orientée dans la direction périphérique du pneumatique du véhicule et s'étendant sur toute la périphérie du pneumatique du véhicule.

11. Profilé de bande de roulement selon les caractéristiques de l'une ou plusieurs des revendications précédentes,
dans lequel, dans le profilé de bande de roulement, plusieurs de ces éléments profilés rehaussés radialement (11, 12, 13, 14) sont réalisés dans des positions axiales différentes du pneumatique du véhicule, les distances entre à chaque fois deux premières fines entailles adjacentes (23) de la grille de fines entailles (21), pour les éléments profilés (11, 14) rehaussés axialement extérieurs dans le pneumatique du véhicule étant supérieures à celles pour les éléments profilés (12, 13, 9) rehaussés radialement disposés axialement plus à l'intérieur.

12. Profilé de bande de roulement selon les caractéristiques de la revendication 11,
dans lequel les distances des premières fines entailles adjacentes (23) d'une grille de fines entailles (21) dans la région de l'épaulement du pneumatique sont 1,5 à 2 fois plus grandes que les distances des premières fines entailles adjacentes (25) d'une grille de fines entailles (22) dans la région de la couronne du pneumatique du véhicule.

13. Profilé de bande de roulement selon les caractéristiques de la revendication 11,
dans lequel les distances de premières fines entailles adjacentes d'une grille de fines entailles dans d'autres éléments profilés rehaussés réalisés axialement entre des éléments profilés rehaussés (11, 14) dans la région de l'épaulement du pneumatique et des éléments profilés dans la région de la couronne du pneumatique sont inférieures aux distances des premières fines entailles adjacentes (23) d'une grille de fines entailles (21) dans la région de l'épaulement du pneumatique et supérieures aux distances de premières fines entailles adjacentes d'une grille de fines entailles dans la région de la couronne.

14. Profilé de bande de roulement selon les caractéristiques de la revendication 13,
dans lequel les distances de premières fines entailles adjacentes d'une grille de fines entailles dans d'autres éléments profilés rehaussés réalisés axialement entre des éléments profilés rehaussés (11, 14) dans la région de l'épaulement du pneumatique et des éléments profilés dans la région de la couronne du pneumatique sont 1,2 à 1,6 fois plus grandes que les distances de premières fines entailles adjacentes d'une grille de fines entailles dans la région de la couronne du pneumatique du véhicule.
